Europäisches Patentamt

European Patent Office

Office européen des brevets

(11) Veröffentlichungsnummer: **0 329 964 B1**

# EUROPÄISCHE PATENTSCHRIFT

(45) Veröffentlichungstag der Patentschrift:
09.10.91 Patentblatt 91/41

(51) Int. Cl.⁵: **B60R 13/06**

(21) Anmeldenummer: 89101250.2

(22) Anmeldetag: 25.01.89

(54) Kantenschutzdichtung.

(30) Priorität: 25.02.88 DE 3805931

(43) Veröffentlichungstag der Anmeldung:
30.08.89 Patentblatt 89/35

(45) Bekanntmachung des Hinweises auf die
Patenterteilung:
09.10.91 Patentblatt 91/41

(84) Benannte Vertragsstaaten:
DE ES FR GB IT SE

(56) Entgegenhaltungen:
EP-A- 0 086 959
GB-A- 2 199 067

(56) Entgegenhaltungen:
PATENT ABSTRACTS OF JAPAN vol. 7, no.
102 (M-211)(1247) 30 April 1983, & JP-A-58
22736 (KINUGAWA GOMU) 10 Februar 1983,
PATENT ABSTRACTS OF JAPAN vol. 7, no.
287 (M-264)(1432) 21 Dezember 1983, & JP-
A-58 161637 (KINUGAWA GOMU) 26 September 1983,

(73) Patentinhaber: Bayerische Motoren Werke
Aktiengesellschaft
Patentabteilung AJ-30 Postfach 40 02 40
Petuelring 130
W-8000 München 40 (DE)

(72) Erfinder: Mago, Zoltan
Ahornstrasse 7
W-8039 Puchheim (DE)

EP 0 329 964 B1

EP 0 329 964 B1

## Beschreibung

Die Erfindung bezieht sich auf eine Kantenschutzdichtung für Türen und Klappen, insbesondere von Fahrzeugen, mit einem Kantenschutzabschnitt und einem hohlprofilförmigen Dichtungsabschnitt der im Gattungsbegriff des Patentanspruchs 1 angegeben Art. Eine solche Dichtung ist aus dene Dokument JP-A-5822736 bekannt.

Solche Kantenschutzdichtungen werden mit dem U-förmig ausgebildeten Kantenschutzabschnitt z.B. auf den Punktflansch an der Türöffnung des Seitenrahmens eines Kraftfahrzeuges gesteckt. Der Dichtungsabschnitt der herkömmlichen Kantenschutzdichtungen besteht dabei aus einem ein- oder mehrzelligen Schlauch, der an derjenigen Seitenfläche des Kantenschutzabschnittes befestigt ist, welche der Dichtfläche zugewandt ist. Der Dichtungsabschnitt einer solchen Kantenschutzdichtung weist dort, wo der Punktflansch bzw. die Kante gekrümmt ist, also z.B. in den Türecken oder an stylistisch oder durch Scharniere oder dergleichen bedingten Kantenkrümmungen starke Verformungen mit entsprechender Faltenbildung auf und besitzt dadurch dort eine schlechte oder gar keine Dichtfunktion. Ferner steht die Richtung, mit der der Dichtungsabschnitt belastet wird, im allgemeinen nicht senkrecht zum Flansch bzw. zur Kante, weicht also von der optimalen Belastungsrichtung ab, d.h. der Richtung, mit der eine möglichst große Dichtfläche erreicht wird.

Dies hat dazu geführt, daß der Durchmesser des schlauchförmigen Dichtungsabschnitts relativ groß ausgebildet und mit einer dünnen Wandung versehen wird, um die durch die Durchmesservergrößerung an sich größer werdenden Schließkräfte zu kompensieren.

Die Verwendung von Schläuchen größeren Durchmessers mit geringerer Wandstärke führt jedoch dazu, daß innere Spannungen in dem Kunststoffschlauch sich stärker auswirken und der Schlauch z.B. durch plastische Verformung schneller altert, d.h. zu einer mehr oder weniger undefinierbaren Lage und Elastizität der Dichtung. Mit anderen Worten, mit der bekannten Kantenschutzdichtung allein ist eine konstante Umschließung der Dichtfläche über die gesamte Dichtlage einer Tür bzw. einer Klappe nicht gewährleistet, wobei die unzulängliche Umschließung nach relativ kurzer Zeit noch schlechter wird.

Bei PKW der gehobenen Preisklasse ist man daher gezwungen, neben der Kantenschutzdichtung am Seitenrahmen eine zusätzliche umlaufende Dichtung türseitig anzubringen.

Aufgabe der Erfindung ist es, eine Kantenschutzdichtung anzugeben, mit der entlang der gesamten Dichtungslänge eine konstante Umschließung der Dichtfläche über die gesamte Lebensdauer gewährleistet ist.

Dies wird erfindungsgemäß durch die im Anspruch 1 gekennzeichnete Kantenschutzdichtung erreicht. Vorteilhafte Ausgestaltungen der Erfindung sind in den Unteransprüchen angegeben.

Bei der erfindungsgemäßen Kantenschutzdichtung übernimmt also die Lippe die Funktion des Toleranzausgleichs, während allein der Dichtungsabschnitt zur Dichtflächenerzeugung dient. Die Funktionen : Toleranzausgleich und Erzeugung von Dichtflächen werden somit getrennt.

Die Lippe wird vorzugsweise steifer ausgebildet als der Dichtungsabschnitt, wodurch ihr eine gleichmäßige Funktion über die gesamte Lebensdauer der Kantenschutzdichtung verliehen wird. Die höhere Steifigkeit kann z.B. durch eine Einlage z.B. aus Stahl oder Kunststoff hervorgerufen werden. Jedoch ist es auch möglich, z.B. bei der Extrusion des Profilstanges für die erfindungsgemäße Kantenschutzdichtung für den Bereich, aus dem die Lippe gebildet wird, einen härteten Kunststoff einzusetzen als für den Dichtungsabschnitt.

Die Lippe stützt sich mit ihrem freien Ende vorzugsweise an der Kante bzw. dem kantenschutztragenden Teil des Kraftfahrzeuges ab. Durch eine Stufe oder eine andere Ausformung an dem kantenschutztragenden Teil zur Abstützung des freien Endes der Lippe kann sichergestellt werden, daß die Schließkraft immer senkrecht zur Lippe und damit zur abdichtenden Fläche steht. D.h. es kann auch an denjenigen Stellen, an denen die Belastungsrichtung nicht senkrecht zum Flansch bzw. zur Kante steht, erreicht werden, daß durch den senkrechten Angriff der Schließkraft gegenüber der abdichtenden Fläche des Dichtungsabschnitts eine nahezu konstante Umschließung der Dichtfläche auch an diesen Stellen erreicht wird. Eine solchen Stufe oder Ausformung kann dabei z.B. beim Tiefziehen des kantenschutztragenden Teils, also beispielsweise des Seitenrahmens, ohne zusätzliche Kosten hergestellt werden.

Mit der erfindungsgemäßen Kantenschutzdichtung wird also eine bessere, alterungsunabhängigere Dichtung erreicht, und zwar mit geringeren Schließkräften, ohne daß eine türseitig verlaufende Dichtung notwendig ist.

Nachstehend ist eine Ausführungsform der erfindungsgemäßen Kantenschutzdichtung anhand der Zeichnung näher erläutert. Darin zeigen :

Fig. 1       einen Schnitt durch eine auf eine Kante aufgesteckte Kantenschutzdichtung ; und

Fig. 2 bis 5       jeweils einen Schnitt durch eine Kantenschutzdichtung am Dachrahmen, an der Scharniersäule unten, oben an der A-Säule bzw. der Schloßsäule der Tür eines Kraftfahrzeuges.

2

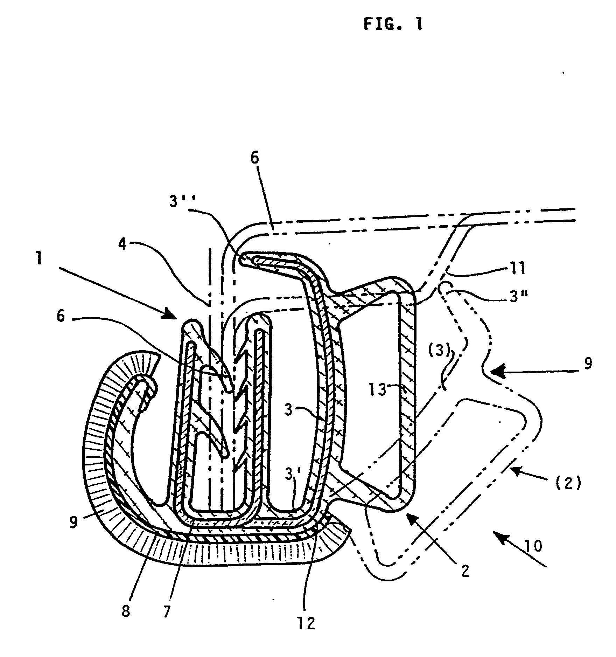

Gemäß Fig. 1 weist die Kantenschutzdichtung einen Kantenschutzabschnitt 1, einen Dichtungsabschnitt 2 und eine Lippe 3 auf.

Der Kantenschutzabschnitt 1 ist, wie üblich, als auf den Flansch oder die Kante 4 aufsteckbarer, diese übergreifender U-förmiger Abschnitt ausgebildet. An seiner Innenseite sind schräg nach innen und zum Grund des U hin sich erstreckende Haltelippen 6 vorgesehen. Der Kantenschutzabschnitt 1 weist ferner eine U-förmige Federeinlage 7 z.B. aus Stahl auf. Über den Kantenschutzabschnitt 1, der z.B. aus PVC bestehen kann, erstreckt sich eine Schicht 8, die als Träger für eine Beflockung 9 dient.

Der hohlprofilförmige Dichtungsabschnitt 2 ist an der von der Kante 4 bzw. dem Kantenschutzabschnitt 1 abgewandten Seitenfläche der Lippe 3 angeordnet.

Die Lippe 3 ist an dem Bereich des Kantenschutzabschnittes 1 befestigt, der von dem Teil 6 abgewandt ist, das mit der Kante 4 versehen ist, also den Kantenschutzabschnitt 1 trägt. Sie ist dabei bei 3′ an dem Kantenschutzabschnitt 1 angelenkt, also z.B. daran elastisch angeformt.

Mit ihrem freien, dem Teil 6 zugewandten Ende 3″ ist die Lippe 3 vom Dichtungsabschnitt 2 weg nach innen gekrümmt, wobei sie sich gemäß den ausgezogenen Linien der Fig. 1 an dem Flansch bzw. der Kante 4 abstützt. Diese Anordnung wird gewählt, wenn der Dichtungsabschnitt 2 gemäß dem Pfeil 9 so belastet wird, daß die Belastungsrichtung senkrecht zur Kante 4 bzw. zur Lippe 3 verläuft.

Wenn die Belastungsrichtung gemäß dem Pfeil 10 verläuft, wird das Teil 6 mit einer Stufe 11 versehen, auf der sich das freie Ende 3″ der Lippe 3 abstützt, wie in Fig. 1 durch die strichpunktiert wiedergegebene Lippe 3 und Dichtabschnitt 2 angedeutet.

Dadurch wird erreicht, daß die Belastungsrichtung gemäß dem Pfeil 10 auch dann senkrecht zur Lippe 3 verläuft, wenn sie zum Flansch bzw. der Kante 4 nicht senkrecht steht. Auf diese Weise ist durch Anbringung bzw. entsprechende Ausbildung von Stufen 11 eine konstante Umschließung der Dichtfläche entlang dem gesamten Umfang einer Tür bzw. einer Klappe gewährleistet.

In der Lippe 3 ist eine Einlage 12 z.B. aus Federstahl vorgesehen. Der Dichtungsabschnitt 2 ist als Hohlprofil oder Schlauch ausgebildet, wobei die abdichtende Fläche 13 abgeplattet ist. Die Lippe 3 kann z.B. aus EPDM und der Dichtungsabschnitt 8 aus Santopren bestehen. Auch können sowohl die Lippe 3 wie der Dichtungsabschnitt 8 aus dem gleichen Kunststoff, z.B. Santoprene bestehen.

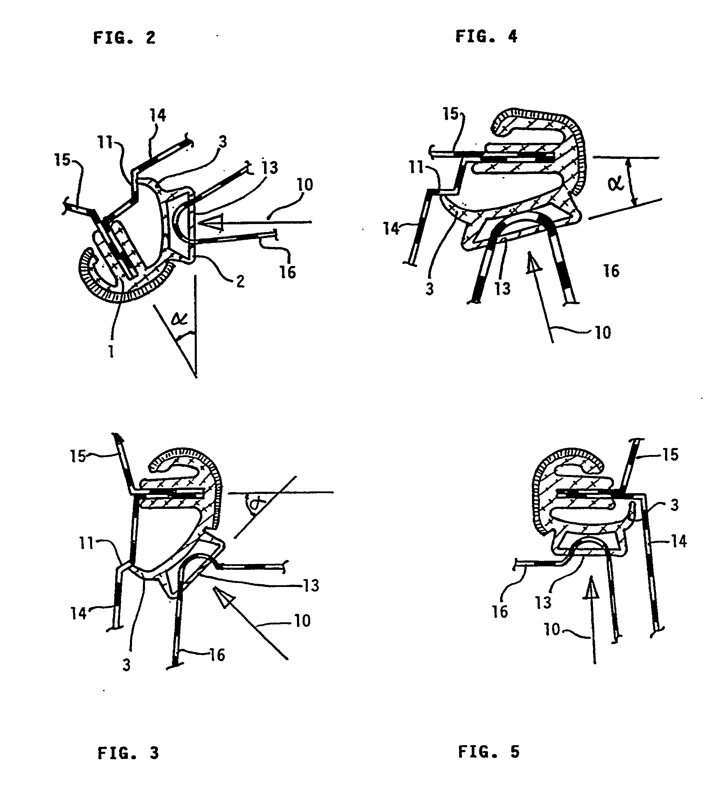

In Fig. 2 bis 5 ist die Anordnung der erfindungsgemäßen Kantenschutzdichtung an verschiedenen Stellen einer Kraftfahrzeugtür veranschaulicht, wobei 14 den Seitenrahmen, 15 das Schließblech und 16 die Tür darstellen. Es ist ersichtlich, daß durch entsprechende Anordnung und Ausbildung der Stufe 11 am Seitenrahmen 14 zur Abstützung der Lippe 3 jeweils eine senkrechte Anordnung der abdichtenden Fläche 13 des Dichtungsabschnitts 2 gegenüber der durch den Pfeil 10 veranschaulichten Belastungsrichtung gewährleistet ist. D.h. durch Anstellung der Lippe 3 mittels der Stufe 11 gegenüber dem Flansch bzw. der Kante 8 um einen Winkel alpha von ca. 30° (Fig. 2), ca 45° (Fig. 3), ca 30° (Fig. 4) bzw. ca. 0° (Fig. 5) ist stets gewährleistet, daß die Schließkräfte senkrecht an der abdichtenden Fläche 13 des Dichtungsabschnittes 2 angreifen.

## Patentansprüche

1. Kantenschutzdichtung für Türen und Klappen, insbesondere von Fahrzeugen, mit einem Kantenschutzabschnitt (1), an dessen vom kantenschutztragenden Teil (6) abgewandten Endbereich eine Lippe (3) angelenkt ist, und einem hohlprofilförmigen Profilabschnitt (2) zur Unterstützung der Dichtwirkung, dadurch gekennzeichnet, daß der hohlprofilförmige Dichtungsabschnitt auf der dem Kantenschutzabschnitt (1) abgewandten Seitenfläche der Lippe (3) angeordnet ist, und daß sich die Lippe (3) mit ihrem freien Ende (3″) an dem kantenschutztragenden Teil (6) abstützt.

2. Kantenschutzdichtung nach Anspruch 2, dadurch gekennzeichnet, daß das kantenschutztragende Teil (6) im Bereich der Abstützung der Lippe (3) so ausgebildet ist, daß die Schließkraft (Pfeil 9, 10) senkrecht zur Lippe (3) ausgerichtet ist.

3. Kantenschutzdichtung nach einem der vorstehenden Ansprüche, dadurch gekennzeichnet, daß die Lippe (3) eine größere Steifigkeit als der Dichtungsabschnitt (2) aufweist.

4. Kantenschutzdichtung nach Anspruch 3, dadurch gekennzeichnet, daß die Lippe (3) mit einer Einlage (12) versehen ist.

5. Kantenschutzdichtung nach einem der vorstehenden Ansprüche, dadurch gekennzeichnet, daß der Dichtungsabschnitt (2) an der abdichtenden Fläche (13) abgeplattet ausgebildet ist.

## Claims

1. An edge-protection seal for doors and hinged flaps, especially of vehicles, having an edge-protection section (1), on whose end region remote from the part (6) carrying the edge-protection a lip (3) is articulated, and having a profiled section (2) of hollow profile form for promoting the sealing action, characterised in that the sealing section of hollow profile form is arranged on the side face of the lip (3) facing away from the edge-protection section (1), and in that the lip (3) is supported with its free end (3″) on the part (6) carrying the edge-protection.

2. An edge-protection seal according to Claim 2, characterised in that the part (6) carrying the edge protection is so formed, in the region of the supporting of the lip (3), that the closure force (arrows 9, 10) is directed perpendicularly to the lip (3).

3. An edge-protection seal according to either one of the preceding Claims, characterised in that the lip (3) has a greater stiffness than the sealing section (2).

4. An edge-protection seal according to Claim 3, characterised in that the lip (3) is provided with an insert (12).

5. An edge-protection seal according to any one of the preceding Claims, characterised in that the sealing section (2) is made flattened on the sealing face (13).

## Revendications

1. Joint de protection d'arête pour portières et panneaux notamment de véhicules comportant un segment de protection d'arête (1) dont la zone d'extrémité opposée à la partie (6) portant le moyen de protection d'arête, une lèvre (3) est articulée et un segment de profil (2), creux pour soutenir l'effet d'étanchéité, joint caractérisé en ce que le segment d'étanchéité en forme de profil creux est prévu sur la face latérale de la lèvre (3) opposée au segment de protection d'arête (1) et en ce que la lèvre (3) s'appuie par son extrémité libre (3″) sur la partie (6) de protection d'arête.

2. Joint de protection d'arête selon la revendication 2, caractérisé en ce que la partie (6) de protection d'arête est réalisée au niveau de l'appui de la lèvre (3) pour que la forme de fermeture (flèches 9, 10) soit perpendiculaire à la lèvre (3).

3. Joint de protection d'arête selon l'une des revendications précédentes, caractérisé en ce que la lèvre (3) a une rigidité plus grande que le segment d'étanchéité (2).

4. Joint de protection d'arête selon la revendication 3, caractérisé en ce que la lèvre (3) comporte un insert (12).

5. Joint de protection d'arête selon l'une des revendications précédentes, caractérisé en ce que le segment d'étanchéité (2) est aplati au niveau de sa surface d'étanchéité (13).

FIG. 1

FIG. 2

FIG. 4

FIG. 3

FIG. 5